# EUROPÄISCHE PATENTSCHRIFT

(11) **EP 1 075 723 B1**
(45) Veröffentlichungstag und Bekanntmachung des Hinweises auf die Patenterteilung: **18.03.2009**
(21) Anmeldenummer: 99957943.6
(22) Anmeldetag: 28.10.1999
(51) Int. Cl.: H02H 7/085

(54) **SCHLIESSVORRICHTUNG MIT SICHERHEITSFUNKTION**
CLOSING DEVICE WITH A SAFETY FUNCTION
DISPOSITIF DE FERMETURE AVEC FONCTION DE SECURITE

(30) Priorität: 27.02.1999 DE 19908658
(43) Veröffentlichungstag der Anmeldung: 14.02.2001
(73) Patentinhaber: ROBERT BOSCH GMBH, 70442 Stuttgart (DE)
(72) Erfinder: PRUESSEL, Holger, D-77830 Buehlertal (DE)
(86) Internationale Anmeldenummer: PCT/DE1999/003454
(87) Internationale Veröffentlichungsnummer: WO 2000/052803

(56) Entgegenhaltungen:
- DE-A- 3 532 078
- DE-A- 19 511 581

## Beschreibung

Die Erfindung betrifft eine Schließvorrichtung mit Sicherheitsfunktion, welche verhindern soll, daß beim Verschließen einer Öffnung durch einen sich über die Öffnung bewegenden Schließkörper sich eventuell in der Öffnung befindende Gegenstände eingeklemmt und beschädigt werden.

Ein wichtiges Anwendungsgebiet für derartige Schließvorrichtungen sind beispielsweise Seiten-oder Dachfenster von Kraftfahrzeugen, bei denen eine Fensterscheibe beziehungsweise ein Schiebedach mit Hilfe eines elektrischen Antriebsmotors verschoben wird.

Derartige Schließvorrichtungen für Kraftfahrzeugfenster oder -dächer müssen kraft gesetzlicher Vorschrift eine Einklemmschutzfunktion bieten, die Verletzungen von Benutzern durch Einklemmen von Körperteilen weitestgehend ausschließen soll. Diese Schutzfunktion soll dadurch erreicht werden, daß die von der Schließvorrichtung ausgeübte Schließkraft auf 100 N begrenzt wird.

### Stand der Technik

Diese Vorgabe wird allgemein zum Beispiel durch Schließvorrichtungen erfüllt, bei denen die Geschwindigkeit des Schließkörpers, ein von dessen Antriebsmotor ausgeübtes Drehmoment oder eine auf den Schließkörper entgegen der Schließbewegung wirkende Kraft erfaßt werden und die Schließbewegung reversiert wird, wenn Änderungen dieser erfaßten Werte darauf hinweisen, daß sich ein eingeklemmter Gegenstand in der Öffnung befinden könnte.

Es hat sich herausgestellt, daß allein die Begrenzung der Schließkraft auf maximal 100 N noch keinen hinreichenden Schutz vor Verletzungen der Benutzer bietet, wenn zum Beispiel eine Hand oder einzelne Finger versehentlich eingeklemmt werden. Es sind deshalb Anstrengungen unternommen worden, Schließvorrichtungen mit Einklemmschutz zu entwickeln, die eine niedrigere maximale Kraft ausüben. Dies stößt jedoch auf Schwierigkeiten, wenn die Schließvorrichtungen im Betrieb Erschütterungen ausgesetzt sind, insbesondere wenn sie als Schließvorrichtungen für Fensterscheiben oder ein Schiebedach eines Kraftfahrzeugs eingesetzt werden. Diese Erschütterungen führen dazu, daß die von der Schließvorrichtung mit dem Zweck der Schließkraftbegrenzung überwachten Parameter wie etwa Motordrehmoment, Gegenkraft etc., zeitweilig schwanken. Je niedriger die maximale Schließkraft der Schließvorrichtung vorgegeben ist, desto leichter kann es vorkommen, daß der überwachte Parameter einen Grenzwert überschreitet, bei dem die Schließvorrichtung auf eine Überschreitung der maximalen Schließkraft erkennt und daraufhin die Schließbewegung abbricht beziehungsweise reversiert. Mit einer solchen Vorrichtung kann es zum Beispiel unmöglich sein, während einer Fahrt auf holprigem Untergrund die Seitenfenster eines Kraftfahrzeugs zu schließen.

Um diesem Problem zu begegnen, wird in DE 4020351 A1 eine Schließvorrichtung mit den Merkmalen des Oberbegriffs des Anspruchs 1 vorgeschlagen, welche mit Hilfe eines Sensorelements mit Meßsignalen versorgt wird, die aus in vertikaler Richtung auf die Fahrzeugkarosserie einwirkenden Beschleunigungskräften resultieren. Die von diesem Sensorelement gemessenen Beschleunigungen werden mit den gleichzeitig gemessenen überwachten Parametern der Schließvorrichtung verrechnet, um so den störenden Einfluß dieser Beschleunigungen zu unterdrücken.

Diese Technik erlaubt zwar einen zuverlässigeren Betrieb der Schließvorrichtung auch bei geringeren Werten der Schließkraftbegrenzung als den gesetzlich erlaubten 100 N, ist aber aus mehreren Gründen noch nicht vollauf befriedigend.

Ein erstes Problem ist, daß der mechanische Aufbau der Schließvorrichtung in der Regel nicht völlig starr ist, so daß infolge einer äußeren Erschütterung der Schließkörper oder dessen Antriebsmechanik zu Schwingungen angeregt werden können, welche dazu führen, daß am Antriebsmotor auch dann noch Kraftspitzen oberhalb des Schließkraftbegrenzungswerts erfaßt werden, wenn die äußere Erschütterung bereits abgeklungen ist. Ein solches Nachschwingen vermag die bekannte Vorrichtung nicht zu kompensieren, so daß es immer noch zu einem unerwünschten Reversieren infolge einer Erschütterung während der Schließbewegung kommen kann.

Ein weiteres Problem ist, daß Reibungswiderstände, die bei der Bewegung des Schließkörpers in einer Führung oder im Antriebsmechanismus des Führungskörpers auftreten, ebenfalls dazu führen können, daß der überwachte Parameter den Grenzwert überschreitet, bei dem die Schließvorrichtung eine Überschreitung des Schließkraftbegrenzungswertes erkennt. Wenn zum Beispiel der überwachte Parameter das vom Antriebsmotor eines Fensterhebers ausgeübte Drehmoment ist, so leuchtet ein, daß dieses nicht nur dann zunehmen wird, wenn ein Gegenstand zwischen der Fensterscheibe und ihrem Rahmen eingeklemmt wird, sondern auch dann, wenn die Fensterscheibe in ihrer Führung schwergängig ist. Solche Reibwiderstände können im Laufe der Betriebsdauer einer Schließvorrichtung durch Verschleiß zunehmen, außerdem können sie konstruktionsbedingt an unterschiedlichen Stellen der Schließbewegung unterschiedliche Werte haben. Dem vermag die bekannte Schließvorrichtung nur dadurch Rechnung zu tragen, dass der Schließkraftbegrenzungswert nicht zu niedrig gewählt wird, und dass insbesondere bei der Festlegung des Begrenzungswertes eine Sicherheitsmarge einkalkuliert wird, um der Möglichkeit Rechnung zu tragen, dass die Schließvorrichtung mit zunehmendem Alter schwergängiger wird.

Mit der DE-A-19511581 ist eine Schließvorrichtung für ein Kraftfahrzeugfenster oder -Schiebedach bekannt geworden, bei dem ein Fenster elektromotorisch verstellt wird. Die Antriebssteuerungsvorrichtung ist dabei als Lernsteuerungstyp ausgebildet, bei dem der Schwellwert für den Einklemmschutz in Abhängigkeit von zuvor gespeicherten Überwachungswerten verändert wird.

Die DE-A-3532078 zeigt ebenfalls ein Motorsteuerungsverfahren, bei dem das Einklemmen eines Hindernis für ein im automatisch betätigten Fensterheber verhindert werden soll. Für die Auslösung des Einklemmschutz wird hierbei ein Referenzwert eingestellt, der dann um einen vorgegebenen Betrag erhöht wird, wenn die Steuervorrichtung an einem bestimmten Punkt ein anwachsendes Motorstromwerts feststellt.

Mit der Vorrichtung wie im Oberbegriff von Anspruch 1 definiert, wird eine Schließvorrichtung, insbesondere für ein Kraftfahrzeugfenster oder - schiebedach, geschaffen, die es erlaubt, einen Schließkraftbegrenzungswert, bei dessen Überschreitung eine Schließbewegung abgebrochen beziehungsweise reversiert wird, so niedrig zu wählen, dass eine Verletzungsgefahr durch Einklemmen eines Körperteils in der zu schließenden Öffnung mit Sicherheit ausgeschlossen werden kann. Augrund der Möglichkeit, den Grenzwert der Schließkraft zu variieren, kann dieser Grenzwert für normale Einsatzbedingungen sehr knapp kalkuliert werden, ohne daß eine Sicherheitsmarge zur Berücksichtigung von ungleichmäßiger Verteilung der Reibungskräfte über die Schließbewegung hinweg oder einer Alterung der Schließvorrichtung berücksichtigt werden muß. Indem die Vorrichtung den Grenzwert in Abhängigkeit von einer früher gemessenen auf den Schließkörper ausgeübten Kraft variiert, ist sie in der Lage, Erschütterungen, denen der Schließkörper ausgesetzt ist, auszufiltern, ohne daß ein eigener Sensor hierfür erforderlich ist. Durch passende Wahl der Zeitdauer, für die eine Variation des Grenzwerts anhält, wird die Vorrichtung unempfindlich gegen auf eine äußere Erschütterung folgende Nachschwingerscheinungen des Schließkörpers beziehungsweise eines zum Übertragen einer Schließkraft von einem Motor auf den Schließkörper verwendeten Antriebsmechanismus, welche zu Schwankungen der vom Motor auszuübenden Antriebskraft führen.

### Vorteile der Erfindung

Erfindungsgemäß erfolgt die Variation des Grenzwerts der Kraft zum einen in der Weise, daß wenn der Sensor, der die entgegen der Schließrichtung auf den Schließkörper wirkende Kraft erfaßt, eine abrupte Abnahme der Kraft erfaßt, die Steuerschaltung den Grenzwert für ein begrenztes Zeitintervall oder ein begrenztes Wegstück des Schließkörpers heraufsetzt. Dies beruht auf der Einsicht, daß eine abrupte Abnahme der Kraft meist darauf zurückzuführen ist, daß der Gegenstand, an dem die Schließvorrichtung montiert ist, abwärts beschleunigt wird, und daß eine Aufwärtsbeschleunigung alsbald folgen wird, wenn die Abwärtsbewegung des Gegenstands endet. Diese Situation tritt bei einem Kraftfahrzeug zum Beispiel auf, wenn es eine Bordsteinkante hinunterfährt oder in eine Vertiefung wie etwa ein Schlagloch fährt. Diese Aufwärtsbeschleunigung führt zu einer Erhöhung der entgegen der Schließbewegung wirkenden Kraft, ist aber nicht auf ein Einklemmen zurückzuführen und wird deswegen von der erfindungsgemäßen Schließvorrichtung dadurch ignoriert, daß der Grenzwert zur Zeit des Auftretens dieser Kraft heraufgesetzt ist.

Gemäss einer bevorzugten Weiterentwicklung der Erfindung ist der Sensor als Sensor-Widerstand im Motorstromkreist angeordnet, oder als Piezoelement oder Dehnungsmessstreifen im Antriebsmechanismus ausgebildet.

Dabei kann insbesondere vorgesehen sein, daß die Steuerschaltung die Ausdehnung eines Zeitintervalls oder eines Wegstücks des Schließkörpers erfaßt, wo die Abnahme der Kraft andauert. Da damit zu rechnen ist, daß die Beschleunigung in Gegenrichtung mit in etwa gleichem Betrag und in etwa gleicher Dauer wirken wird, ist es zweckmäßig, das Zeitintervall oder das Wegstück, wo der Grenzwert heraufgesetzt wird, genauso groß oder, unter Berücksichtigung von Schwingungserscheinungen, besser noch größer als die erfaßte Ausdehnung zu wählen.

Der Wert, um den infolge einer Abwärtsbeschleunigung der Grenzwert erhöht wird, ist zweckmäßigerweise einer während der Dauer der Abnahme der Kraft gemessenen Abwärtsbeschleunigung proportional.

Gemäß einer bevorzugten Weiterentwicklung der Erfindung ermittelt die Steuerschaltung die Änderung der Kraft in Abhängigkeit vom von dem Schließkörper zurückgelegten Weg und setzt den Grenzwert herauf, wenn die Kraft mit dem Weg schneller zunimmt, als einer Grenz-Federrate entspricht.

Wenn nämlich die Zunahme der Kraft auf eine Aufwärtsbeschleunigung des Fahrzeugs zurückgeht, so erfolgt sie in der Regel binnen kleiner Sekundenbruchteile, die einem zurückgelegten Weg des Schließkörpers von allenfalls wenigen Millimetern oder Bruchteilen von Millimetern entsprechen, also mit einer hohen Federrate. Durch Heraufsetzen des Grenzwerts in diesem Fall wird unerwünschtes Reversieren der Schließvorrichtung unterdrückt. Die Kraftzunahme beim Einklemmen eines Körperteils ist im Vergleich wesentlich niedriger. Indem bei niedriger Federrate ein niedriger Grenzwert der Kraft verwendet wird, wird einem Verletzen von Körperteilen beim Einklemmen vorgebeugt. Ein geeigneter Wert für die Grenz-Federrate ist zum Beispiel 20 N/mm oder mehr. Eine Heraufsetzung des Grenzwerts der Kraft kann auf einfachem Wege dadurch erfolgen, daß die Steuerschaltung die Überwachung der Kraft zeitweilig unterbricht.

Ein besonders bevorzugtes Merkmal der Erfindung ist, daß die Schließvorrichtung einen Speicher zum Abspeichern von Kraftwerten jeweils entsprechend einer Position oder mehreren benachbarten Positionen des Schließkörpers umfaßt. Bei den gespeicherten Kraftwerten kann es sich um an den entsprechenden Positionen gemessene Kraftwerte oder um für die betreffenden Positionen geltende Grenzwerte handeln. Diese Werte können jeweils für unterschiedliche Positionen des Schließkörpers verschieden vorgegeben sein, um Ungleichmäßigkeiten der auszuübenden Schließkraft Rechnung zu tragen, die durch die Konstruktion der Schließvorrichtung bedingt sein können.

Zweckmäßigerweise werden diese Kraftwerte oder Grenzwerte durch Bildung von gleitenden Mittelwerten der an der entsprechenden Position auf den Schließkörper wirkenden Kraft fortlaufend aktualisiert, um Abnutzungserscheinungen, Verunreinigungen etc. der Schließvorrichtung Rechnung zu tragen.

Die im Laufe einer Schließbewegung gemessenen Kraftwerte werden zweckmäßigerweise erst dann zur Aktualisierung der gleitenden Mittelwerte herangezogen, wenn feststeht, daß eine eventuelle Abweichung eines gemessenen Kraftwertes in Bezug zum entsprechenden gespeicherten Wert nicht zu einem Abbruch der Schließbewegung geführt hat. Auf diese Weise wird eine Verfälschung der gleitenden Mittelwerte durch bei einem tatsächlichen Einklemmen gemessene Kraftwerte vermieden.

Des weiteren ist bevorzugt, daß jeder abgespeicherte Kraftwert durch Mittelung über mehrere benachbarten Positionen des Schließkörpers erhalten ist. Hierdurch wird nicht nur Speicherplatz eingespart, die Mittelwertbildung über mehrere Positionen im Laufe einer Schließbewegung unterdrückt auch weitgehend den Einfluß einzelner fehlerhafter Messungen.

Weitere Merkmale und Vorteile der Erfindung ergeben sich aus den nachfolgenden Beschreibungen mit Bezug auf die Figuren.

### Figuren

Es zeigen:
Figur 1 und 2 jeweils schematisch den Aufbau einer Schließvorrichtung gemäß zweier Ausführungsbeispiele der Erfindung; und
Figur 3 ein Ablaufdiagramm einer von der Steuerschaltung des in Figur 2 dargestellten Ausführungsbeispiels durchgeführten Verarbeitung.

### Beschreibung der Ausführungsbeispiele

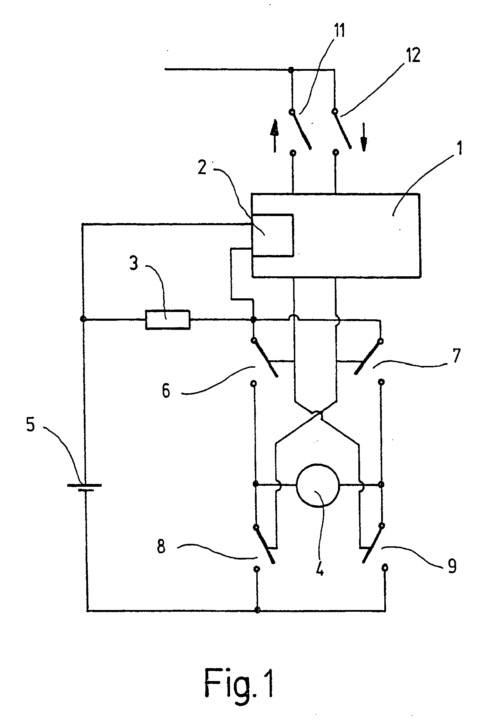

Figur 1 zeigt ein schematisches Schaltbild eines ersten Ausführungsbeispiels einer erfindungsgemäßen Schließvorrichtung für ein Kraftfahrzeugfenster mit einer Steuerschaltung 1, die als Mikroprozessor oder Mikrocontroller ausgebildet sein kann. Die Steuerschaltung 1 empfängt die Anweisungen "Öffnen" oder "Schließen" von zwei Steuerschaltern 11 und 12, die im Fahrgastraum des Kraftfahrzeugs angebracht sind und von einer darin befindlichen Person betätigt werden können, um eine Scheibe zu schließen (Steuerschalter 11) oder zu öffnen (Steuerschalter 12). Die Steuerschaltung 1 kann jeweils einer einzelnen beweglichen Scheibe zugeordnet, in welchem Fall sie lediglich die Signale von zwei Steuerschaltern 11, 12 empfängt, sie kann aber auch mehreren oder allen beweglichen Scheiben sowie einem Schiebedach eines Kraftfahrzeugs zugeordnet sein und dementsprechend Eingänge für eine größere Zahl von Steuerschaltern aufweisen. Im folgenden wird der Übersichtlichkeit halber nur der Fall betrachtet, daß die Steuerschaltung 1 einer einzelnen Scheibe zugeordnet ist, da die Ausführung der Erfindung in Form einer Steuerschaltung für mehrere Fenster beziehungsweise für Fenster und ein Schiebedach anhand der nachfolgenden Beschreibung für den Fachmann keine Schwierigkeiten aufwirft.

Eine Stromquelle 5, im Falle der Anwendung der Erfindung auf ein Kraftfahrzeug, die Kraftfahrzeugbatterie, ist vorgesehen, um einen Motor 4 über eine Mehrzahl von Schaltern 6, 7, 8, 9 mit einem Antriebsstrom zu versorgen. Der Zustand der Schalter 6 bis 9 wird von der Steuerschaltung 1 in noch ausführlich zu beschreibender Weise gesteuert.

Ein Mechanismus zum Umsetzen einer Drehbewegung des Motors 4 in eine Translationsbewegung eines Schließkörpers wie etwa einer Fensterscheibe oder eines Schiebedachs eines Kraftfahrzeugs ist bekannt und braucht an dieser Stelle nicht eingehend beschrieben zu werden.

Ein Widerstand 3 ist in dem von der Stromquelle 5, dem Motor 4 und den Schaltern 6 bis 9 gebildeten Stromkreis in Reihe angeordnet. Insbesondere bei einem Motor 4, dessen Winkelgeschwindigkeit unabhängig vom aufgebrachten Drehmoment im wesentlichen konstant ist, ist der Betrag der am Widerstand 3 abfallenden Spannung proportional zur von dem Motor 4 aufgebrachten Leistung und damit proportional zum Drehmoment beziehungsweise einer der Verschiebung des vom Motor 4 angetriebenen Verschlußkörpers entgegenwirkenden Kraft. Der Widerstand erfüllt somit die Funktion eines Sensors 3 für die eine entgegen der Schließrichtung auf den Schließkörper wirkende Kraft.

Die an den Anschlußklemmen des Widerstands auftretenden Potentiale werden von einem AD-Wandler erfaßt, und der digitalisierte Wert der Potentialdifferenz wird von dem AD-Wandler an die Steuerschaltung 1 weitergegeben. Im in der Figur gezeigten Zustand sind Steuerschalter 14,12 und Schalter 6 bis 9 offen, und der Motor 4 steht.

Wenn eine Person den Abwärts-Steuerschalter 12 betätigt, schließt die Steuerschaltung 1 die Schalter 6 und 9 und setzt damit den Motor 4 mit einer Polung unter Spannung, die eine Drehrichtung des Motors bewirkt, die einer Öffnungsbewegung des Schließkörpers entspricht. In dieser Zeit muß die Steuerschaltung 1 den vom AD-Wandler 2 gelieferten Meßwert nicht überwachen, da bei einem sich abwärts bewegenden Schließkörper keine Gefahr des Einklemmens besteht. Die Schalter 6 und 9 werden solange geschlossen gehalten, wie der Steuerschalter 12 betätigt bleibt, oder bis ein (nicht dargestellter) äußerer Sensor der Steuerschaltung 1 signalisiert, daß der Schließkörper eine vollständig geöffnete Position erreicht hat. Alternativ kann die Steuerschaltung 1 auch den vom AD-Wandler ausgegebenen digitalisierten Wert des Spannungsabfalls am Sensor-Widerstand 3 auswerten und die Schalter 6 und 9 öffnen, wenn sie anhand einer abrupten Zunahme des digitalisierten Werts erkennt, daß der Schließkörper einen Anschlag am Ende seines Weges in der vollständig geöffneten Position erreicht hat.

Wenn die Person den Aufwärts-Steuerschalter 11 betätigt, schließt die Steuerschaltung 1 die Schalter 7 und 8 und setzt damit den Motor 4 unter Spannung mit einer Polung, die diesen veranlaßt, den Schließkörper in Schließrichtung anzutreiben. Der Spannungsabfall am Sensor-Widerstand 3 wird in diesem Falle von der Steuerschaltung 1 fortlaufend überwacht. In einem ersten Betriebszustand der Steuerschaltung, als normaler Betriebszustand bezeichnet, erfaßt die Steuerschaltung 1 den vom AD-Wandler 2 gelieferten Wert, vergleicht ihn mit einem ersten Grenzwert und ermittelt seine Änderungsgeschwindigkeit in Abhängigkeit von der Zeit oder vom vom Schließkörper zurückgelegten Weg. Wenn die Änderungsgeschwindigkeit gering ist, insbesondere kleiner als 20 N/mm, und die Kraft einen ersten Grenzwert von weniger als 100 N überschreitet, öffnet die Steuerschaltung 1 die Schalter 7 und 9 und schließt die Schalter 6 und 9, woraufhin sich der Schließkörper in Öffnungsrichtung bewegt. Falls die Zunahme der Kraft also dadurch bedingt war, daß ein Gegenstand in der vom Schließkörper zu schließenden Öffnung eingeklemmt wurde, wird dieser durch die Öffnungsbewegung des Schließkörpers wieder freigegeben.

Wenn die Schließvorrichtung Erschütterungen ausgesetzt ist, insbesondere wenn sie in einem Kraftfahrzeug eingesetzt ist und das Fahrzeug auf unebenem Untergrund fährt, können Trägheitskräfte am Schließkörper angreifen, die den vom Sensor-Widerstand 3 gelieferten Meßwert verfälschen.

Wenn die erfindungsgemäße Schließvorrichtung zum Schließen eines Seitenfensters eines Kraftfahrzeugs eingesetzt wird und das Kraftfahrzeug zum Beispiel durch ein Schlagloch fährt, erfährt die den Schließkörper bildende Scheibe zunächst eine Beschleunigung in Schließrichtung, anschließend wird die Scheibe mit einer zu dieser Beschleunigung proportionalen Kraft wieder gebremst. Diese proportionale Kraft muß die Schließvorrichtung zusätzlich aufbringen, um die Scheibe in Schließrichtung zu bewegen. Dies kann dazu führen, daß die mit Hilfe des Sensor-Widerstands 3 erfaßte Kraft den ersten Grenzwert überschreitet, ohne daß hier tatsächlich ein Einklemmen vorliegt. Deshalb geht die Steuerschaltung 1 nach der Erfassung einer abrupten Abnahme der mit Hilfe des Sensor-Widerstands 3 erfaßten Kraft in einen zweiten Zustand über, in dem die erfaßte Kraft mit einem zweiten Grenzwert verglichen wird, der größer als der erste ist. Die Differenz der zwei Grenzwerte ist proportional zur zuvor erfaßten Abnahme der Kraft. Der Proportionalitätsfaktor und/oder die Zeitdauer, für die der zweite Zustand aufrechterhalten wird, werden zweckmäßigerweise in Abhängigkeit von Federungseigenschaften des Fahrzeugs sowie des Antriebsmechanismus der Fensterscheibe eingestellt. Generell gilt: Je härter die Federung ist, desto größer muß der zweite Grenzwert beziehungsweise der Proportionalitätsfaktor gewählt werden, um beim Fahren durch ein Schlagloch ein unerwünschtes Reversieren der Fensterscheibe zu vermeiden; umso kürzer ist aber auch die Zeitspanne, während derer eine erhöhte Kraft auf die Fensterscheibe wirkt, und umso kürzer muß folglich der zweite Zustand aufrechterhalten bleiben. Die Mindestdauer des zweiten Zustands entspricht der Zeitdauer, während der zuvor die Abnahme der Kraft erfaßt worden ist.

Wenn das Fahrzeug auf eine Erhebung in der Fahrbahn fährt, so führt dies zu einer Aufwärtsbeschleunigung des Fahrzeugs beziehungsweise zu einer abwärtsgerichteten Kraft auf die Fensterscheibe, die bewirken kann, daß der erste Grenzwert überschritten wird. Um in einem solchen Fall ein fehlerhaftes Reversieren der Scheibe zu vermeiden, vergleicht die Steuerschaltung die Änderungsgeschwindigkeit der vom Motor ausgeübten Kraft mit einer Grenz-Federrate von zum Beispiel 20 N/mm. Wenn ein Körperteil einer Person in der Fensteröffnung eingeklemmt wird, ist die gemessene Zunahme der Kraft mit dem zurückgelegten Weg kleiner als dieser Wert. Wenn die gemessene Zunahme größer ist, ist dies ein Hinweis darauf, daß die Zunahme der Kraft auf eine äußere Erschütterung zurückgeht und ein Reversieren der Schließvorrichtung deshalb nicht erforderlich oder sogar unerwünscht ist. In einer solchen Situation reagiert die Steuerschaltung 1, in dem sie zeitweilig in einen dritten Zustand übergeht, in dem die ausgeübte Kraft mit einem dritten Grenzwert verglichen wird, der ebenfalls größer ist als der im ersten Betriebszustand geltende Grenzwert, oder in dem ein Vergleich der ausgeübten Kraft mit einem Grenzwert völlig unterbleibt, was praktisch einem Heraufsetzen des Grenzwertes auf Unendlich entspricht.

In allen Fällen variiert die erfindungsgemäße Schließvorrichtung den Grenzwert, mit dem die vom Motor auf den Schließkörper ausgeübte Kraft verglichen wird, nicht in Abhängigkeit von einer mit Hilfe eines zusätzlichen externen Sensors gemessenen von außen einwirkenden Beschleunigung, sondern allein in Abhängigkeit von einer zu einem früheren Zeitpunkt gemessenen Kraft.

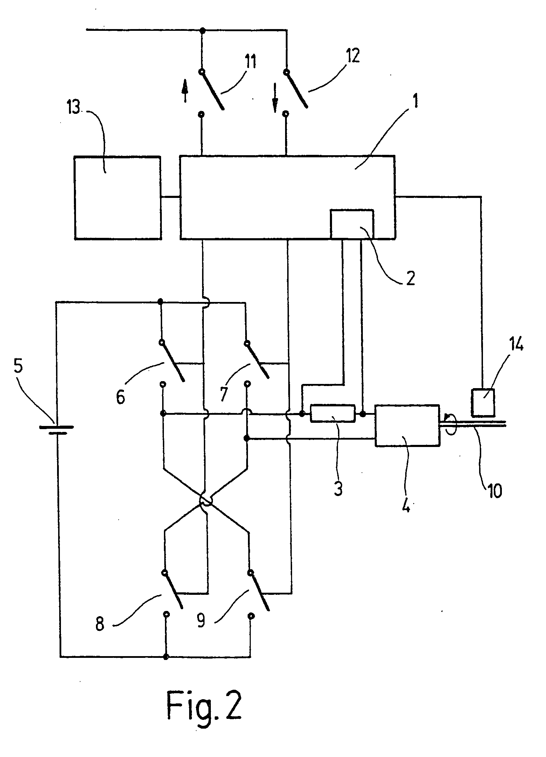

Figur 2 zeigt ein weiterentwickeltes Beispiel einer erfindungsgemäßen Schließvorrichtung. Der AD-Wandler 2, der Sensor-Widerstand 3, der Motor 4, die Stromquelle 5, die Schalter 6 bis 9 sowie die Steuerschalter 11, 12 entsprechen denen des Ausführungsbeispiels der Figur 1 und werden nicht erneut beschrieben.

Die Steuerschaltung 1 ist beim Ausführungsbeispiel der Figur 2 zusätzlich mit einem Speicher 13 und einem Umdrehungssensor 14, zum Beispiel in Gestalt eines induktiven Gebers, verbunden, welcher an der Abtriebswelle 10 des Motors 4 angeordnet ist. Mit Hilfe des Umdrehungssensors 14 "kennt" die Steuerschaltung 1 zu jedem Zeitpunkt den von der Welle 10 ab einem Anschlag, der der offenen oder geschlossenen Position des Schließkörpers entsprechen kann, zurückgelegten Drehwinkel und damit die momentane Position des Schließkörpers. Der Speicher 13 enthält zu jeder Position des Schließkörpers einen Wert der an der betreffenden Position üblicherweise aufzubringenden Schließkraft. Dieser Wert wird von der mit Hilfe des Sensor-Widerstands 3 erfaßten momentanen Schließkraft abgezogen. Die so erhaltene Differenz ist im Idealfall ein exaktes Maß für auf den Schließkörper wirkende Kräfte, seien es durch eine externe Beschleunigung hervorgerufene Kräfte oder von einem in einer zu schließenden Öffnung eingeklemmten Gegenstand ausgeübte Kräfte, frei von im Antriebsmechanismus des Schließkörpers oder in dessen Führung auftretenden Reibungskräften.

Gemäß einer ersten Variante ist der Inhalt des Speichers 13 vom Hersteller der Schließvorrichtung fest vorgegeben. Dabei können die in den Speicher 13 eingetragenen Kraftwerte solche Werte sein, die an einem Referenzexemplar der Schließvorrichtung gemessen wurden und von denen erwartet wird, daß sie bei in Serie gefertigten Schließvorrichtungen gleicher Bauart in gleicher Weise auftreten. Dies gestattet zum Beispiel die Kompensation von lokalen Maxima von Reibungskräften, die durch die Konstruktion der Schließvorrichtung und insbesondere des Antriebsmechanismus des Schließkörpers bedingt sind, etwa in der Nähe eines Totpunkts des Antriebsmechanismus.

Gemäß einer zweiten Variante können die Werte jeweils für eine einzelne Schließvorrichtung gemessen werden und in einem dieser Schließvorrichtung zugeordneten Speicher 13 abgespeichert werden.

Bei einer dritten, bevorzugten Variante ist vorgesehen, daß die Steuerschaltung 1 die Werte im Speicher 13 im Laufe des Betriebs der Schließvorrichtung laufend aktualisiert, um so langfristigen Veränderungen, zum Beispiel Abnutzungserscheinungen, Rechnung zu tragen. Diese laufende Aktualisierung beruht auf dem Prinzip der gleitenden Mittelwertbildung, bei dem, wenn sich eine an einer gegebenen Position des Schließkörpers gemessene Kraft und der für die betreffende Position abgespeicherte Wert der Kraft unterscheiden, der gespeicherte Wert um einen Korrekturbetrag an den gemessenen Wert angenähert wird, wobei der Korrekturbetrag kleiner als die Differenz zwischen gespeichertem und gemessenem Wert ist. Eine solche Aktualisierung erfolgt aber nur dann, wenn sicher ist, daß eine im Laufe einer Schließbewegung gemessene Zunahme der Schließkraft nicht auf einen Einklemmvorgang zurückzuführen ist.

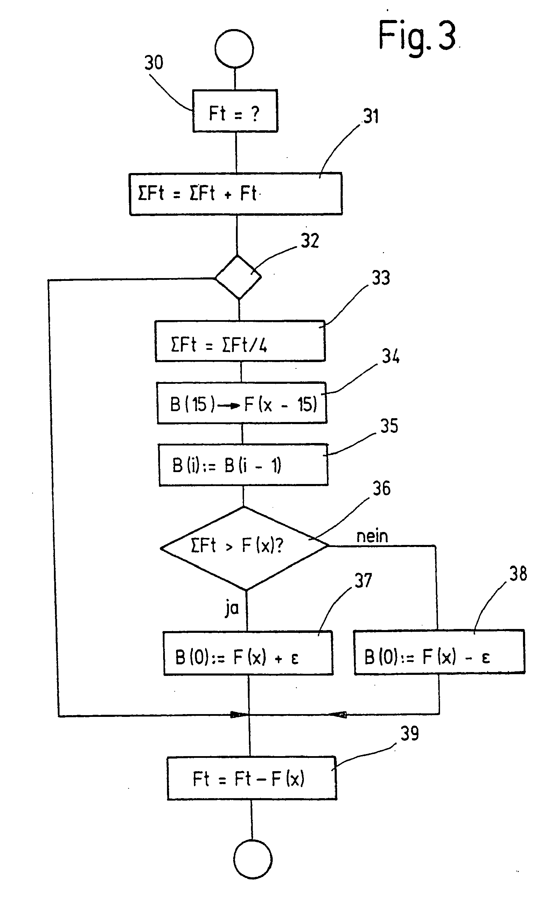

Eine spezielle Ausgestaltung einer von der Steuerschaltung 1 ausgeführten Verarbeitung zum Eliminieren von Reibungskräften aus der vom Sensor-Widerstand 3 erfaßten Kraft und zum laufenden Aktualisieren der im Speicher 13 gespeicherten Kraftwerte wird mit Bezug auf Figur 3 beschrieben. Die vom Motor ausgeübte Schließkraft wird zyklisch erfaßt, und in jedem Erfassungszyklus wird die in der Figur dargestellte Verarbeitung ausgeführt.

Die Verarbeitung beginnt mit der Erfassung eines Wertes der ausgeübten Schließkraft Ft in Schritt 30. In Schritt 31 wird der erfaßte Wert Ft zu einem Summenwert ΣFt hinzuaddiert. Durch diesen Summationsschritt wird jeweils die Summe der Kraftwerte Ft von vier aufeinander folgenden Meßpositionen x gebildet. In Schritt 32 wird entschieden, ob der vorliegende Zyklus ein vierter Zyklus ist, das heißt ob vier Kraftwerte Ft addiert worden sind. Wenn nein, springt die Verarbeitung direkt zum Schritt 39, andernfalls wird in Schritt 33 die Summe EFt durch die Zahl 4 der aufaddierten Summanden dividiert, um einen Mittelwert der ausgeübten Kraft über die vier Positionen zu bilden.

Ein Puffer B(0,1,....,15) enthält Werte, die von den 16 zuletzt gebildeten Mittelwerten abgeleitet sind. Der älteste dieser Werte, B(15), wird in Schritt 34 an der Speicherstelle (x-15), die der Position des Schließkörpers zur Zeit seiner Gewinnung entspricht, in einer im Speicher 13 gespeicherten Tabelle von Kraftwerten F abgespeichert. Anschließend werden die restlichen Elemente des Puffers, B(0) bis B(14), im Puffer um je eine Position, auf die Plätze 1 bis 15, weitergeschoben.

In Schritt 36 wird der Mittelwert ΣFt mit dem für die entsprechende Position x des Schließkörpers in der Tabelle F des Speichers 13 abgespeicherten Wert F(x) verglichen. Wenn der neu gemessene Mittelwert EFt größer ist, wird in Schritt 37 in das Pufferelement B(0) der gespeicherte Wert F(x) der Kraft für die entsprechende Position x zuzüglich eines Inkrements ε eingetragen. Wenn der Mittelwert kleiner ist, erhält B(0) in Schritt 38 den Wert F(x)-ε. Dabei kann ε ein fest vorgegebener Betrag sein, er kann auch proportional zur Differenz ΣFt-F(x) sein, wobei in diesem Fall das Proportionalitätsverhältnis ein Maß dafür ist, wie schnell bei einer Änderung der auftretenden Reibungskräfte die gespeicherten Werte F(x) den tatsächlichen Verhältnissen folgen.

Anschließend wird in Schritt 39 der gespeicherte Kraftwert F(x) vom aktuell gemessenen Wert Ft abgezogen. Der in dieser Weise bereinigte Kraftwert Ft sollte im Idealfall nur dann von 0 abweichen, wenn äußere Kräfte, wie eben Beschleunigungskräfte oder eine Einklemmkraft, auf den Schließkörper wirken.

In einer nachfolgenden, in der Figur nicht mehr dargestellten Verarbeitung überwacht die Steuerschaltung 1 den derart bereinigten Kraftwert Ft darauf, ob ein Kraft-Grenzwert überschritten wird, oder ob sich der Wert in einer Weise ändert, die auf das Einwirken einer äußeren Beschleunigung beziehungsweise Erschütterung hinweist, etwa durch ein abruptes Abfallen oder Ansteigen der Kraft, wie oben mit Bezug auf Figur 1 beschrieben. Falls bei dieser Überwachung ein Einklemmvorgang erkannt wird, werden sämtliche Elemente des Puffers B mit gespeicherten Kraftwerten F(x-15) bis F(x) überschrieben. Auf diese Weise ist sichergestellt, daß eine Zunahme der Kraft, die aufgetreten ist, bevor der Einklemmzustand erkannt wurde, nicht zu einer Veränderung der im Speicher 13 gespeicherten Kraftwerte führt.

Da die erfindungsgemäße Schließvorrichtung externe Beschleunigungen, die den erfaßten Wert der Schließkraft stören können, durch eine Veränderung des Grenzwerts kompensiert, mit dem die ausgeübte Kraft verglichen wird, ist es möglich, den im normalen Zustand der Steuerschaltung 1 geltenden Grenzwert wesentlich niedriger anzusetzen als die durch geltende Normen im Kraftfahrzeugsektor vorgeschriebenen 100 N und dadurch den Schutz von Personen gegen Einklemmen deutlich zu verbessern, ohne daß Abstriche an der Zuverlässigkeit der Schließvorrichtung und ungewolltes Reversieren in Kauf genommen werden müssen.

Beim oben in Bezug auf Figur 3 beschriebenen Ausführungsbeispiel entsprechen die im Speicher 13 gespeicherten Kraftwerte im wesentlichen den von der Schließvorrichtung im normalen Betrieb zur Überwindung von Reibung ausgeübten Kräften. Als weitere Variante ist es möglich, anstelle dieser Werte solche Werte im Speicher 13 einzuspeichern, die der Reibungskraft zuzüglich eines Zuschlags entsprechen, der insbesondere gleich dem im normalen Zustand geltenden Grenzwert sein kann.

Die Erfindung ist selbstverständlich nicht auf die Verwendung des Sensor-Widerstands 3 als Mittel zum Erfassen der vom Motor ausgeübten Kraft beschränkt. Generell ist jeder Sensor oder jede Sensoranordnung geeignet, die einen Rückschluß auf die ausgeübte Kraft zuläßt, zum Beispiel ein Piezoelement oder Dehnungsmeßstreifen im Antriebsmechanismus etc.

## Patentansprüche

1. Schließvorrichtung, insbesondere für ein Kraftfahrzeugfenster oder - Schiebedach, mit einem Antriebsmotor (4) zum Verschieben eines Schließkörpers an einer zu schließenden Öffnung, einem Sensor (3) zum Erfassen einer entgegen der Schließrichtung auf den Schließkörper wirkenden Kraft und einer Steuerschaltung (1) zum Überwachen der Kraft und Abbrechen einer Schließbewegung des Schließkörpers, wenn der Sensor (3) erfasst, dass die Kraft einen Grenzwert übersteigt, wobei die Steuerschaltung (1) den Grenzwert in Abhängigkeit von einer zu einem früheren Zeitpunkt gemessenen Kraft variiert, **dadurch gekennzeichnet, dass** die Steuerschaltung den Grenzwert für ein begrenztes Zeitintervall oder ein begrenztes Wegstück des Schließkörpers heraufsetzt, wenn der Sensor (3) eine abrupte Abnahme der Kraft erfasst.

2. Schließvorrichtung nach Anspruch 1, **dadurch gekennzeichnet, dass** der Sensor (3) als Sensor-Widerstand ausgebildet ist, der in Reihe mit dem Antriebsmotor (4) im Motorstromkreis angeordnet ist oder der Sensor (3) als ein Piezoelement oder Dehnungsmessstreifen im Antriebsmechanismus ausgebildet ist.

3. Schließvorrichtung nach Anspruch 1, **dadurch gekennzeichnet, daß** die Steuerschaltung (1) die Ausdehnung eines Zeitintervalls oder eines Wegstücks erfaßt, wo die Abnahme der Kraft andauert, und den Grenzwert während eines Zeitintervalls oder Wegstücks von wenigstens gleicher Ausdehnung heraufsetzt.

4. Schließvorrichtung nach einem der Ansprüche 1 oder 3, **dadurch gekennzeichnet, daß** die Steuerschaltung (1) eine Abwärtsbeschleunigung des Kraftfahrzeugs ermittelt, während die Abnahme der Kraft andauert, und den Grenzwert um einen der Abwärtsbeschleunigung proportionalen Wert erhöht.

5. Schließvorrichtung nach einem der vorhergehenden Ansprüche, **dadurch gekennzeichnet, daß** die Steuerschaltung (1) die Änderung der Kraft in Abhängigkeit vom von dem Schließkörper zurückgelegten Weg ermittelt und den Grenzwert heraufsetzt, wenn die Kraft mit dem Weg schneller zunimmt, als einer Grenz-Federrate entspricht.

6. Schließvorrichtung nach Anspruch 5, **dadurch gekennzeichnet, daß** die Grenz-Federrate größer oder gleich 20 N/mm ist.

7. Schließvorrichtung nach einem der Ansprüche 5 oder 6, **dadurch gekennzeichnet, daß** die Steuerschaltung (1) den Grenzwert heraufsetzt, indem sie die Überwachung der Kraft zeitweilig unterbricht.

8. Schließvorrichtung nach einem der vorhergehenden Ansprüche, **dadurch gekennzeichnet, daß** sie einen Speicher (13) zum Abspeichern von Kraftwerten jeweils entsprechend einer Position (x) des Schließkörpers umfaßt.

9. Schließvorrichtung nach Anspruch 8, **dadurch gekennzeichnet, daß** der Speicher (13) gleitende Mittelwerte (F(x)) der an der entsprechenden Position (x) auf den Schließkörper wirkenden Kraft (Ft) enthält.

10. Schließvorrichtung nach Anspruch 8, **dadurch gekennzeichnet, daß** der Speicher (13) gleitende Mittelwerte der an der entsprechenden Position auf den Schließkörper wirkenden Kraft zuzüglich eines Zuschlags erhält.

11. Schließvorrichtung nach einem der Ansprüche 9 oder 10, **dadurch gekennzeichnet, daß** die Steuerschaltung die gleitenden Mittelwerte erst aktualisiert, wenn feststeht, daß eine Abweichung eines gemessenen Kraftwertes in Bezug zum entsprechenden gespeicherten Wert nicht zu einem Abbruch der Schließbewegung geführt hat.

## Claims

1. Closing apparatus, in particular for a motor vehicle window or sunroof, having a drive motor (4) for moving a closing body across an opening which is to be closed, a sensor (3) for detecting a force which acts on the closing body against the closing direction, and a control circuit (1) for monitoring the force and terminating a closing movement of the closing body if the sensor (3) detects that the force exceeds a limit value, with the control circuit (1) varying the limit value as a function of a force which is measured at an earlier point in time, **characterized in that** the control circuit raises the limit value for a limited period of time or a limited distance travelled by the closing body if the sensor (3) detects a sudden decrease in force.

2. Closing apparatus according to Claim 1, **characterized in that** the sensor (3) is in the form of a sensor resistor which is arranged in series with the drive motor (4) in the motor circuit, or the sensor (3) is in the form of a piezo element or strain gauge in the drive mechanism.

3. Closing apparatus according to Claim 1, **characterized in that** the control circuit (1) detects the extent of a period of time or of a distance travelled where the decrease in force persists, and raises the limit value during a period of time or over a distance travelled by at least the same extent.

4. Closing apparatus according to either of Claims 1 and 3, **characterized in that** the control circuit (1) determines downward acceleration of the motor vehicle while the decrease in force persists, and increases the limit value by a value which is proportional to the downward acceleration.

5. Closing apparatus according to one of the preceding claims, **characterized in that** the control circuit (1) determines the change in force as a function of the distance covered by the closing body and raises the limit value if the force increases more rapidly with the distance travelled than corresponds to a limit spring rate.

6. Closing apparatus according to Claim 5, **characterized in that** the limit spring rate is greater than or equal to 20 N/mm.

7. Closing apparatus according to either of Claims 5 and 6, **characterized in that** the control circuit (1) raises the limit value by temporarily interrupting the process of monitoring the force.

8. Closing apparatus according to one of the preceding claims, **characterized in that** it comprises a memory (13) for storing force values which in each case correspond to a position (x) of the closing body.

9. Closing apparatus according to Claim 8, **characterized in that** the memory (13) contains sliding average values (F(x)) of the force (Ft) which acts on the closing body at the corresponding position (x).

10. Closing apparatus according to Claim 8, **characterized in that** the memory (13) contains sliding average values of the force which acts on the closing body at the corresponding position, plus an extra amount.

11. Closing apparatus according to either of Claims 9 and 10, **characterized in that** the control circuit first updates the sliding average values when it is established that a deviation of a measured force value in relation to the corresponding stored value has not led to termination of the closing movement.

## Revendications

1. Dispositif de fermeture, en particulier pour une fenêtre d'un véhicule automobile ou pour un toit ouvrant, comprenant un moteur d'entraînement (4) pour déplacer un corps de fermeture sur une ouverture à fermer, un capteur (3) pour détecter une force agissant à l'encontre du sens de fermeture sur le corps de fermeture et un circuit de commande (1) pour contrôler la force et interrompre un mouvement de fermeture du corps de fermeture, si le capteur (3) détecte que la force dépasse une valeur limite, le circuit de commande (1) faisant varier la valeur limite en fonction d'une force mesurée à un instant antérieur, **caractérisé en ce que** le circuit de commande augmente la valeur limite pendant un intervalle de temps limité ou sur une distance limitée du corps de fermeture si le capteur (3) détecte une diminution soudaine de la force.

2. Dispositif de fermeture selon la revendication 1, **caractérisé en ce que** le capteur (3) est réalisé sous la forme d'une résistance-capteur, qui est disposée en série avec le moteur d'entraînement (4) dans le circuit électrique du moteur, ou le capteur (3) est réalisé sous forme d'élément piézoélectrique ou de jauge de contrainte dans le mécanisme d'entraînement.

3. Dispositif de fermeture selon la revendication 1, **caractérisé en ce que** le circuit de commande (1) détecte l'amplitude d'un intervalle de temps pendant lequel ou d'une distance sur laquelle la diminution de la force a lieu, et augmente la valeur limite pendant un intervalle de temps ou sur une distance au moins de même amplitude.

4. Dispositif de fermeture selon l'une quelconque des revendications 1 ou 3, **caractérisé en ce que** le circuit de commande (1) détecte une décélération du véhicule automobile, pendant la durée de diminution de la force, et augmente la valeur limite d'une valeur proportionnelle à la décélération.

5. Dispositif de fermeture selon l'une quelconque des revendications précédentes, **caractérisé en ce que** le circuit de commande (1) détecte la variation de la force en fonction de la distance parcourue par le corps de fermeture et augmente la valeur limite lorsque la force augmente plus rapidement avec la course que par rapport à une caractéristique élastique limite.

6. Dispositif de fermeture selon la revendication 5, **caractérisé en ce que** la caractéristique élastique limite est supérieure ou égale à 20 N/mm.

7. Dispositif de fermeture selon l'une quelconque des revendications 5 ou 6, **caractérisé en ce que** le circuit de commande (1) augmente la valeur limite en interrompant temporairement le contrôle de la force.

8. Dispositif de fermeture selon l'une quelconque des revendications précédentes, **caractérisé en ce qu'**il comprend une mémoire (13) pour mémoriser des valeurs de force à chaque fois en fonction d'une position (x) du corps de fermeture.

9. Dispositif de fermeture selon la revendication 8, **caractérisé en ce que** la mémoire (13) contient des valeurs moyennes glissantes (F(x)) de la force (Ft) agissant à la position correspondante (x) sur le corps de fermeture.

10. Dispositif de fermeture selon la revendication 8, **caractérisé en ce que** la mémoire (13) contient des valeurs moyennes glissantes de la force agissant à la position correspondante sur le corps de fermeture avec une majoration.

11. Dispositif de fermeture selon l'une quelconque des revendications 9 ou 10, **caractérisé en ce que** le circuit de commande ne met à jour les valeurs moyennes glissantes qu'après avoir constaté qu'un écart entre une valeur de force mesurée et la valeur mémorisée correspondante n'a pas conduit à une interruption du mouvement de fermeture.
